# EUROPÄISCHE PATENTSCHRIFT

(11) **EP 2 651 706 B1**
(45) Veröffentlichungstag und Bekanntmachung des Hinweises auf die Patenterteilung: **29.04.2015**
(21) Anmeldenummer: 11784648.5
(22) Anmeldetag: 16.11.2011
(51) Int. Cl.: B60S 1/24, B60S 1/58

(54) **SCHEIBENWISCHVORRICHTUNG**
WINDSCREEN WIPER DEVICE
APPAREIL D'ESSUIE-GLACE

(30) Priorität: 14.12.2010 DE 102010063018
(43) Veröffentlichungstag der Anmeldung: 23.10.2013
(73) Patentinhaber: Robert Bosch GmbH, 70442 Stuttgart (DE)
(72) Erfinder: HUESGES, Mario, 77830 Buehlertal (DE); STERNS, Orlando, 76228 Karlsruhe (DE); GEUBEL, Paul, 76534 Baden-Baden (DE)
(86) Internationale Anmeldenummer: PCT/EP2011/070192
(87) Internationale Veröffentlichungsnummer: WO 2012/079896

(56) Entgegenhaltungen:
- EP-A1- 1 683 694
- DE-A1-102006 054 753
- DE-A1-102009 002 842
- US-A- 3 282 120
- US-A- 5 979 254

## Beschreibung

Die vorliegende Erfindung betrifft eine Scheibenwischvorrichtung, insbesondere für einen Heckscheibenwischer eines Kraftfahrzeuges, mit einem Wischermotor, der über eine in einem Getriebegehäuse aufgenommene Getriebeanordnung eine einen Wischhebel betätigende Abtriebswelle antreibt, wobei die Getriebeanordnung zur Übertragung einer rotatorischen Bewegung des Wischermotors in eine oszillierende Drehbewegung der Abtriebswelle ein Umsetzgetriebe aufweist, welches ein Schneckenrad, eine mit einem Schneckenrad drehgelenkig verbundene Schubstange und ein gelenkig mit der Schubstange verbundenes, ortsfest in dem Getriebegehäuse um eine. Drehachse drehbar gelagertes Zahnsegment umfasst, das mit einem an der Antriebswelle angeordneten Ritzel kämmt.

Derartige Scheibenwischvorrichtungen sind allgemein bekannt. Im Stand der Technik werden Heckwischerantriebe beschrieben, bei denen ein Elektromotor eine Ankerwelle konstant in eine Drehrichtung antreibt. An der Ankerwelle ist eine Schnecke ausgebildet, die ein Schneckenrad eines in der Scheibenwischvorrichtung vorgesehenen Stirnradgetriebes ebenfalls in eine Drehrichtung konstant antreibt. Ferner weist das Stirnradgetriebe eine Schubstange auf sowie einen über einen Befestigungsbolzen gelenkig mit der Schubstange verbundenes Zahnsegment. Das Zahnsegment ist beabstandet von der Rotationsachse der Abtriebswelle über einen lösbaren Gelenkbolzen ortsfest in dem Getriebegehäuse drehbar gelagert und über die Schubstange gelenkig mit dem Schneckenrad verbunden. An dem Steg ist ein Zahnsegment vorgesehen, welches mit dem an der Abtriebswelle drehfest angebrachten Ritzel kämmt. Die Drehachse des Zahnsegmentes stimmt mit einer durch die Zähne des Zahnsegments gebildeten Zahnachse überein. Dies führt dazu, dass je nach Toleranzlage der Einzelteile ein Spiel zwischen dem Zahnsegment und dem Ritzel auftritt.

Im Stand der Technik wurde vorgeschlagen, dieses Spiel zu verringern, indem sogenannte Bremszähne in den Wendelagen vorgesehen werden. Die Bremszähne werden durch einen Sprung in der Verzahnungsgeometrie erzeugt. Allerdings zeigte sich im Stand der Technik, dass diese Ausführungsform aufgrund des Sprungs in der Verzahnung ein unharmonisches Wischverhalten zur Folge hat. Dies führt gleichzeitig zu Getriebegeräuschen und einem unruhigen Wischablauf.

Dokument DE 10 2009 002 842 A offenbart eine Scheibenwischervorrichtung gemäß das erste Teil des Anspruchs 1.

Es ist daher Aufgabe der vorliegenden Erfindung, eine Scheibenwischvorrichtung bereitzustellen, die das Spiel im Umsetzgetriebe verringert und so zu einem harmonischen ruhigen Wischverhalten des Wischhebels beiträgt.

### Offenbarung der Erfindung

Diese Aufgabe wird erfindungsgemäß dadurch gelöst, dass das Zahnsegment derart ausgebildet, dass eine durch die Anordnung der Zähne des Zahnsegments gebildete zentrale Zahnachse und die Drehachse des Zahnsegmentes um einen Abstand V versetzt zueinander angeordnet sind.

### Vorteile der Erfindung

Mit anderen Worten wird die Drehachse des Zahnsegments exzentrisch zu der Zahnachse des Zahnsegmentes positioniert. Eine entsprechende Lagebohrung in dem Getriebegehäuse wird versetzt zu der durch die Zähne des Zahnsegments gebildeten zentralen Zahnachse in das Zahnsegment sowie in das Getriebegehäuse eingebracht. Durch diese Exzentrizität wird in den Wendelagen bzw. der Parklage und Umkehrlage des Wischhebels eine erhöhte Pressung zwischen Ritzel und Zahnsegment in den Wendelagen erzielt, was eine Reduktion des Spiels in dem Umsetzgetriebe zur Folge hat, da eine erhöhte Pressung in den Umkehrlagen zwischen Ritzel und Zahnsegment vorherrscht. Als Folge kann eine Reduzierung des Spiels in den Wendelagen erreicht werden. Auch die Position des Wischhebels in der Parkposition und in den Wendelagen kann beobachtet werden. Aufgrund des damit verbundenen wesentlich harmonischerer Wischablauf können Getriebegeräusche reduziert werden. Auch die Herstellbarkeit der Verzahnung des Zahnsegmentes wird hierdurch wesentlich vereinfacht, da keine Stufungen innerhalb der Ausbildung des Zahnsegmentes mehr vorgesehen werden müssen.

Da für verschiedene Scheibenwischvorrichtungen je nach Einsatzgebiet, insbesondere je nach Fahrzeugtyp, ein anderer Wischablauf seitens der Hersteller gefordert wird, ist in einem Ausführungsbeispiel der Abstand V zwischen Zahnachse und Drehachse variabel einstellbar, so dass über den Abstand V der Zahndruck zwischen Ritzel und Zahnsegment einstellbar ist. Dies kann beispielsweise erreicht werden, in dem in dem Zahnsegment ein Langloch vorgesehen ist, über welches das Zahnsegment in dem Getriebegehäuse, insbesondere über eine Befestigungsschraube oder einen Befestigungsbolzen in dem Getriebegehäuse befestigt werden kann.

Zur Förderung eines symmetrischen möglichst sinusförmigen Bewegungsablaufs des Wischerarms auf der Windschutzscheibe des Kraftfahrzeuges kann in einem Ausführungsbeispiel der vorliegenden Erfindung vorgesehen sein, den Kraftfluss zwischen dem an der Abtriebswelle drehfest angeordneten Ritzel und dem Zahnsegment bei entsprechender Anordnung innerhalb des Getriebegehäuses in einer Ebene vorzusehen. Als Folge werden Querkräfte oder Momente aufgrund eines im Stand der Technik vorhandenen Höhenversatzes zwischen Ritzel und Zahnsegment verhindert bzw. komplett ausgeschaltet, was zu geringeren Reibungsverlusten zwischen dem kraftübertragenden Bauteil und damit zu einer Steigerung des Wirkungsgrades der Scheibenwischvorrichtung führt.

Zur Reduzierung des Gewichtes des Getriebes in dem Getriebegehäuse kann in dem Zahnsegment eine Materialaussparung vorgesehen sein.

Eine besonders günstige Anordnung der kraftübertragenden Bauteile in dem Getriebegehäuse sieht vor, dass das Ritzel und/oder das Schneckenrad und/oder das Zahnsegment somit mit Ausnahme der Schubstange sämtliche kraftübertragenden Elemente des Umsetzgetriebes in eine in dem Getriebegehäuse in eine Kraftübertragungsebene angeordnet sind. Dadurch wird erreicht, dass durch die im Stand der Technik vohandene Höhenstufung auftretende Momente im Bereich des Kraftflusses nahezu vollständig ausgeschlossen werden können. Dies führt wiederum wie bereits erwähnt zu einer Verminderung der Verluste durch Reibung und damit zu einer Steigerung des Wirkungsgrades.

Um eine vereinfachte Möglichkeit einer Variation bzw. einer Einstellbarkeit eines Wischwinkels eines Scheibenwischers auf der Windschutzscheibe an den Fahrzeugtyp des Kraftfahrzeuges zu schaffen, ist in einem Ausführungsbeispiel der vorliegenden Erfindung vorgesehen, die Beabstandung der Schubstange von der zentralen Achse des Schneckenrades zu variieren, indem die Schubstange zur gelenkigen Verbindung mit dem Schneckenrad mit einem Gelenkbolzen in mindestens eine in dem Schneckenrad vorgesehene Exzenterbohrung definierten Abstandes zu der zentralen Achse des Schneckenrades eingreift. Eine besonders große Variationsmöglichkeit ergibt sich, wenn mehrere Exzenterbohrungen mit unterschiedlicher Beabstandung zu der zentralen Achse des Schneckenrades an letzerem vorgesehen sind.

Wenn das Schneckenrad mehrere Exenterbohrungen aufweist, die jeweils zu einer Rotationsachse des Schneckenrades unterschiedlich beabstandet angeordnet sind, ist es ferner möglich, durch Wahl einer entsprechenden Exenterbohrung eine Übersetzung zwischen Zahnsegment und Ritzel zu verändern und darüber verschiedene Geschwindigkeiten einzustellen. Alternativ können auch mehrere Aufnahmebohrungen in dem Zahnsegment vorgesehen sein, in dem die Schubstange gelenkig befestigbar ist.

Hinsichtlich weiterer vorteilhafter Ausgestaltungen der Erfindung wird auf die Erläuterungen der beigefügten Zeichnungen sowie die Unteransprüche verwiesen.

### Kurzbeschreibung der Zeichnungen

Es zeigen:
- Figur 1:: Eine perspektivische Darstellung eines erfindungsgemäßen Umsetzgetriebes in den beiden Wendelagen;
- Figur 2:: eine vergrößerte Teildarstellung eines erfindungsgemäßen Umsetzgetriebes gemäß der Figur 1 in einer Wendelage;
- Figur 3:: ein erfindungsgemäßes Zahnsegment; und

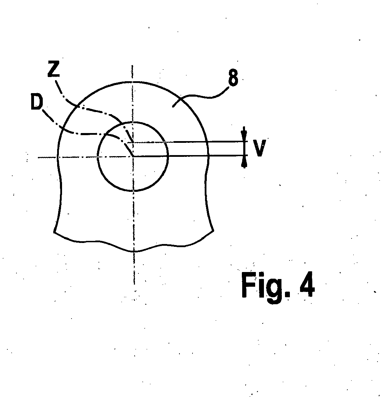

- Figur 4:: eine Teildarstellung des erfindungsgemäßen Zahnsegmentes gemäß Figur 3.

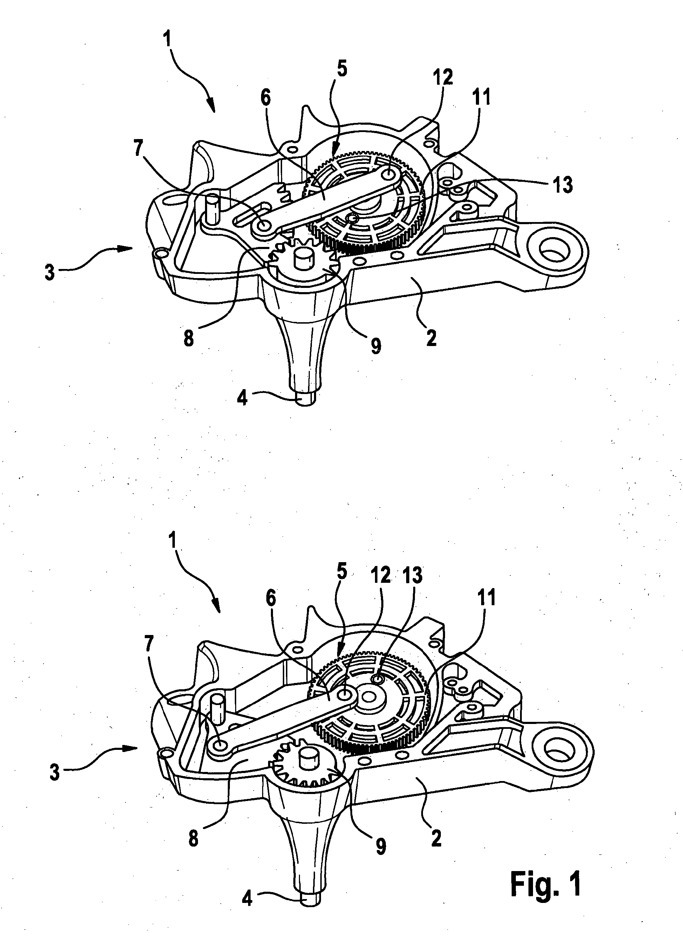

Die Figur 1 zeigt eine perspektivische Darstellung einer Scheibenwischvorrichtung 1 für einen Heckscheibenwischer eines Kraftfahrzeuges gemäß der Erfindung.

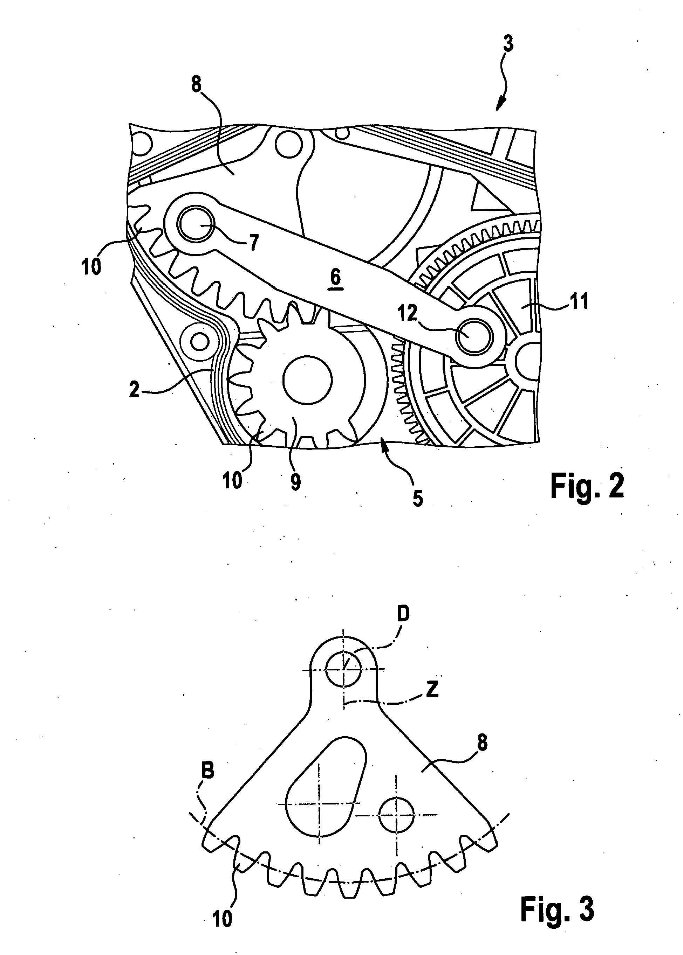

Die Scheibenwischvorrichtung 1 weist einen nicht dargestellten Wischermotor auf, der über eine in einem Getriebegehäuse 2 aufgenommene Getriebeanordnung 3 eine Abtriebswelle 4 antreibt. Über die Abtriebswelle 4 ist ein ebenfalls nicht dargestellter Wischhebel auf einer Windschutzscheibe des Kraftfahrzeuges hin und her bewegbar. Die Getriebeanordnung 3 weist zur Übertragung einer rotatorischen Bewegung des Wischermotors in eine oszillierende Drehbewegung der Abtriebswelle 4 ein Umsetzgetriebe 5 auf. Das Umsetzgetriebe 5 wiederum weist eine Schubstange 6 sowie einen über einen Befestigungsbolzen 7 gelenkig mit der Schubstange 6 verbundenes Zahnsegment 8 auf. Das Zahnsegment 8 ist über einen Befestigungsbolzen 9 drehfest in dem Getriebegehäuse um eine Drehachse D drehbar gelagert und kämmt mit einem an der Abtriebswelle 4 angeordneten Ritzel 9. Wie insbesondere in den Figuren 2 und 3 zu sehen, ist das Zahnsegment 8 derart ausgebildet, dass eine durch die Anordnung der Zähne 10 des Zahnsegmentes insbesondere durch den im Zahnkreis B gebildeten Mittelpunkt der Verzahnung Z und die Drehachse D des Zahnsegmentes um einen Abstand V versetzt zueinander angeordnet sind. Dies führt dazu, dass die Verzahnungen des Zansegmentes und des Ritzels sich nicht verkeilen kann und dennoch eine erhöhte Pressung in den Umkehrlagen durch die zur Verzahnung exzentrisch positionierte Lagerbohrung des Befestigungsbolzens 7 erreicht wird. Durch die Exzentrizität wird in den Wendelagen ein erhöhter Zahndruck zwischen dem Ritzel 9 und dem Zahnsegment 8 hervorgerufen, wodurch das Spiel innerhalb des Umsetzgetriebes 5 verringert wird. Die Folge ist ein harmonischer Wischablauf des Wischhebels auf der Windschutzscheibe des Kraftfahrzeuges bei gleichzeitiger Verringerung der Getriebegeräusche.

Das Zahnsegment 8, das mit dem Zahnsegment 8 kämmende, drehfest mit der Abtriebswelle 4 verbundene Ritzel 9 sowie ein über die Schubstange 6 antreibende, sich rotatorisch bewegende Schneckenrad 11 sind in einer gemeinsamen Ebene in dem Getriebegehäuse 2 angeordnet. Somit erfolgt der Kraftübertragungsfluss vom Wischermotor über eine mit einer Schnecke versehene Ankerwelle auf das Schneckenrad 11 über die Übertragung vom Zahnsegment 8 auf das Ritzel 9 mit Ausnahme der Übertragung der Bewegung vom Schneckenrad 11 über die Schubstange 6 auf das Zahnsegment 8 in einer Kraftebene, so dass die Entwicklung von Querkräften weitestgehend unterdrückt werden kann. Durch die ortsfeste im Zahnkreis B exzentrisch angeordnete Lagerung des Zahnsegmentes 8 in dem Getriebegehäuse 3 ist eine weitere Sicherung des Umsetzgetriebes 5 gegen die Einwirkung von Querkräften gegeben, da eventuell auf dem Kraftübertragungsweg dennoch auftretende Querkräfte über die Lagerung des Zahnsegmentes 8 mittels des Bolzens 7 von dem Getriebegehäuse 3 aufgenommen und über letzteres abgeführt werden können. So wird ein stabilerer Bewegungsablauf erreicht, was einem symmetrischen und möglichst sinusförmigen Bewegungsablauf zuträglich ist.

In einem alternativen, nicht dargestellten Ausführungsbeispiel ist vorgesehen, zur Befestigung des Zahnsegmentes 8 in dem Getriebegehäuse 3 ein Langloch in dem Zahnsegment 8 ausgebildet. Dieses Langloch ermöglicht es, den Befestigungspunkt und damit den Drehpunkt des Zahnsegmentes 8 zu variieren und damit auch die Beabstandung zwischen dem durch den Zahnkreis B gebildeten zentralen Zahnachse Z und der Drehachse des Zahnsegmentes 8.

## Patentansprüche

1. Scheibenwischvorrichtung (1), insbesondere für einen Heckscheibenwischer eines Kraftfahrzeuges, mit einem Wischermotor, der über eine in einem Getriebegehäuse (2) aufgenommene Getriebeanordnung (3) eine einen Wischhebel betätigende Abtriebswelle (4) antreibt, wobei die Getriebeanordnung (3) zur Übertragung einer rotatorischen Bewegung des Wischermotors in eine oszillierende Drehbewegung der Abtriebswelle (4) ein Umsetzgetriebe (5) aufweist, welches ein Schneckenrad (11), eine mit dem Schneckenrad (11) drehgelenkig verbundene Schubstange (6) und ein gelenkig mit der Schubstange (6) verbundenes, ortsfest in dem Getriebegehäuse (3) um eine Drehachse drehbar gelagertes Zahnsegment (8) umfasst, das mit einem an der Abtriebswelle (4) angeordneten Ritzel (9) kämmt, **dadurch gekennzeichnet, dass** das Zahnsegment (8) derart ausgebildet ist, dass eine durch die Anordnung der Zähne des Zahnsegmentes (8) gebildete zentrale Zahnachse (Z) und die Drehachse (D) des Zahnsegmentes (8) um einen Abstand V versetzt zueinander angeordnet sind.

2. Scheibenwischvorrichtung (1) nach Anspruch 1, **dadurch gekennzeichnet, dass** der Abstand V variierbar ist und über den Abstand V der Zahndruck zwischen Ritzel (9) und Zahnsegment (8) einstellbar ist.

3. Scheibenwischvorrichtung (1) nach Anspruch 1 oder 2, **dadurch gekennzeichnet, dass** in dem Zahnsegment eine Materialaussparung zur Reduzierung des Gewichtes des Getriebes (5) in dem Getriebegehäuse (3) vorgesehen ist.

4. Scheibenwischvorrichtung (1) nach einem der vorherigen Ansprüche, **dadurch gekennzeichnet, dass** das Ritzel (9) und/oder das Schneckenrad (11) und/oder das Zahnsegment (8) in einer gemeinsamen Ebene in dem Getriebegehäuse (3) angeordnet sind.

5. Scheibenwischvorrichtung (1) nach einem der vorherigen Ansprüche, **dadurch gekennzeichnet, dass** die Schubstange (6) zur gelenkigen, drehfesten Verbindung mit dem Schneckenrad (11) mit einem Gelenkbolzen (17) in mindestens eine in dem Schneckenrad (11) vorgesehene Exzenterbohrung (13) eingreift.

6. Scheibenwischvorrichtung (1) nach einem der vorherigen Ansprüche, **dadurch gekennzeichnet, dass** das Schneckenrad (11) und/oder das Zahnsegment (8) mehrere Exzenterbohrungen (12) aufweist, die jeweils zu einer Rotationsachse des Zahnsegmentes (8) unterschiedlich beabstandet angeordnet sind.

## Claims

1. Window wiper device (1), in particular for a rear window wiper of a motor vehicle, with a wiper motor which, via a gear arrangement (3) accommodated in a gear housing (2), drives an output shaft (4), which actuates a wiper lever, wherein, in order to transfer a rotary movement of the wiper motor into an oscillating rotational movement of the output shaft (4), the gear arrangement (3) has a conversion gear (5) which comprises a worm wheel (11), a connecting rod (6) which is connected in a hinged manner to the worm wheel (11), and a toothed segment (8) which is connected in an articulated manner to the connecting rod (6), is mounted rotatably about an axis of rotation in the gear housing (3) in a positionally fixed manner and meshes with a pinion (9) arranged on the output shaft (4), **characterized in that** the toothed segment (8) is designed in such a manner that a central tooth axis (Z), which is formed by the arrangement of the teeth of the toothed segment (8), and the axis of rotation (D) of the toothed segment (8) are arranged offset with respect to each other by a distance V.

2. Window wiper device (1) according to Claim 1, **characterized in that** the distance V is variable and the tooth pressure between pinion (9) and toothed segment (8) is adjustable via the distance V.

3. Window wiper device (1) according to Claim 1 or 2, **characterized in that** a material cut-out is provided in the toothed segment to reduce the weight of the gear (5) in the gear housing (3).

4. Window wiper device (1) according to one of the preceding claims, **characterized in that** the pinion (9) and/or the worm wheel (11) and/or the toothed segment (8) are/is arranged in a common plane in the gear housing (3).

5. Window wiper device (1) according to one of the preceding claims, **characterized in that** the connecting rod (6) for the articulated connection to the worm wheel (11) for conjoint rotation engages by means of a hinge pin (17) in at least one eccentric bore provided in the worm wheel (11).

6. Window wiper device (1) according to one of the preceding claims, **characterized in that** the worm wheel (11) and/or the toothed segment (8) have/has a plurality of eccentric bores (12) which are each arranged at a different spacing from an axis of rotation of the toothed segment (8).

## Revendications

1. Dispositif d'essuie-glace (1), en particulier pour un essuie-glace de lunette arrière d'un véhicule automobile, avec un moteur d'essuie-glace, qui entraîne un arbre de sortie (4) actionnant un balai d'essuieglace au moyen d'un dispositif de transmission (3) logé dans un boitier de transmission (2), dans lequel le dispositif de transmission (3) présente un mécanisme de conversion (5) pour la transformation d'un mouvement de rotation du moteur d'essuie-glace en un mouvement de rotation oscillant de l'arbre de sortie (4), qui comprend une roue à vis sans fin (11), une bielle (6) reliée par une articulation tournante à la roue à vis sans fin (11) et un segment denté (8) relié par une articulation à la bielle (6) et supporté de façon rotative autour d'un axe de rotation de façon stationnaire dans le boîtier de transmission (3), qui engrène avec un pignon (9) monté sur l'arbre de sortie (4), **caractérisé en ce que** le segment denté (8) est configuré de telle manière qu'un axe central de denture (Z) formé par l'agencement des dents du segment denté (8) et l'axe de rotation (D) du segment denté (8) soient disposés d'une façon décalée l'un de l'autre d'une distance V.

2. Dispositif d'essuie-glace (1) selon la revendication 1, **caractérisé en ce que** la distance V est variable et la pression des dents entre le pignon (9) et le segment denté (8) peut être réglée au moyen de la distance V.

3. Dispositif d'essuie-glace (1) selon la revendication 1 ou 2, **caractérisé en ce qu'**il est prévu dans le segment denté un évidement de matière pour la diminution du poids de la transmission (5) dans le boîtier de transmission (3).

4. Dispositif d'essuie-glace (1) selon l'une quelconque des revendications précédentes, **caractérisé en ce que** le pignon (9) et/ou la roue à vis sans fin (11) et/ou le segment denté (8) sont disposés dans un plan commun dans le boîtier de transmission (3).

5. Dispositif d'essuie-glace (1) selon l'une quelconque des revendications précédentes, **caractérisé en ce que** la bielle (6) s'engage avec un pivot d'articulation (17) dans au moins un alésage excentrique (13) prévu dans la roue à vis sans fin (11) pour la liaison articulée calée en rotation avec la roue à vis sans fin (11).

6. Dispositif d'essuie-glace (1) selon l'une quelconque des revendications précédentes, **caractérisé en ce que** la roue à vis sans fin (11) et/ou le segment denté (8) présente(nt) plusieurs alésages excentriques (12), qui sont respectivement disposés à une distance différente d'un axe de rotation du segment denté (8).
